# EUROPEAN PATENT APPLICATION

(11) **EP 1 150 481 A1**
(43) Date of publication of application: **31.10.2001**
(21) Application number: 00440113.9
(22) Date of filing: 25.04.2000
(51) Int. Cl.: H04M 11/00, H04N 7/14

(54) **Video conferencing system**

(71) Applicant: ALCATEL, 75008 Paris (FR)
(72) Inventor: Schneider, Philippe, 67370 Truchtersheim (FR)
(74) Representative: van Bommel, Jan Peter

(57) **Abstract**

Known telecommunication systems comprising a switch and terminals having a display + video codec for displaying video and an audio tranceiver for transceiving audio and comprising a detector for a detection of a telephone call going on between a first and a second terminal, can offer more user possibilities by providing said telecommunication system with a transmitter for, in response to said detection and an activation signal, transmitting video displayed at said first terminal to said second terminal for being displayed there as well. So, while a user of said first terminal is watching video, which video either originates at said first terminal or arrives via said switch after being generated by an external video source, said user of said first terminal has got the possibility (activation signal) of allowing an other user of said second terminal (who for example made said call) to also watch said video.

## Description

The invention relates to a telecommunication system comprising at least two terminal systems coupled via at least one switch, with at least a first terminal system comprising a first display coupled to a first video codec for displaying video signals and comprising a first audio tranceiver for transceiving audio signals, and with said telecommunication system comprising a detector for a detection of an exchange of audio signals between said first terminal system and at least one second terminal system.

Such a telecommunication system is known in the form of for example a public or private switched network, with said first terminal system for example being a pc + monitor + telephone pc card + headset + ISDN connection, or for example a pc + monitor + modem + analog/ISDN connection and a separate telephone + analog/ISDN connection, and with said detector for example being present in the form of a hardware relais in said telephone pc card and/or said telephone and/or for example being present in the form of a software function in a processor of said pc and/or of said telephone pc card and/or of said telephone and/or for example being present in said switch.

Such a telecommunication system is disadvantageous, inter alia, due to offering user possibilities insufficiently.

It is an object of the invention, inter alia, to provide a telecommunication system as described in the preamble, which offers more user possibilities.

Thereto, the telecommunication system according to the invention is characterised in that said first terminal system comprises a first receiver for a receival of an activation signal originating from a user, with said telecommunication system comprising a transmitter for, in response to said detection and said receival, transmitting said video signals displayed at said first display of said first terminal system to at least said second terminal system for being displayed at a second display of said second terminal system as well.

By detecting said exchange of audio signals, in other words by detecting a telephone call being made between said user of said first terminal system and an other user of said second terminal system, while said user of said first terminal system is watching said video signals on the first display, which video signals either originate from an internal video source at said first terminal system or arrive via said switch after being generated by an external video source coupled to said switch, said user of said first terminal system has got the possibility (by generating said activation signal) of allowing said other user of said second terminal system to also watch said video signals.

The invention is based on the insight, inter alia, that at each terminal system, audio signals and video signals do not need to arrive from the same source.

The invention solves the problem, inter alia, of providing a telecommunication system which offers more user possibilities.

A first embodiment of the telecommunication system according to the invention is characterised in that said detector comprises a subdetector for a subdetection of said exchange being originated at said second terminal system.

By subdetecting said exchange of audio signals being originated at said second terminal system, in other words by detecting said telephone call being set up from said second terminal system to said first terminal system, whereby said user of said first terminal system while watching said video signals gets this incoming telephone call, said user of said first terminal system can accept said incoming call, speak with said other user of said second terminal system and thereby offer this other user to also receive said video signals.

A second embodiment of the telecommunication system according to the invention is characterised in that said telecommunication system comprises an adaptor for, in response to said receival, adapting said video signals in dependence of at least one of said first video codec of said first terminal system and a second video codec of said second video system.

By using said adaptor, located either in one of said terminal systems or in said switch, even different video codecs will be able to deal with video signals coming from the same video source.

The invention further relates to a terminal system for use in a telecommunication system comprising at least two terminal systems coupled via at least one switch, with said terminal system comprising a display coupled to a video codec for displaying video signals and comprising an audio tranceiver for transceiving audio signals, and with said telecommunication system comprising a detector for a detection of an exchange of audio signals between said terminal system and at least one further terminal system.

The terminal system according to the invention is characterised in that said terminal system comprises a receiver for a receival of an activation signal originating from a user, with said telecommunication system comprising a transmitter for, in response to said detection and said receival, transmitting said video signals displayed at said display of said terminal system to at least said further terminal system for being displayed at a further display of said further terminal system as well.

A first embodiment of the terminal system according to the invention is characterised in that said detector comprises a subdetector for a subdetection of said exchange being originated at said further terminal system.

A second embodiment of the terminal system according to the invention is characterised in that said terminal system comprises an adaptor for, in response to said receival, adapting said video signals in dependence of at least one of said video codec of said terminal system and a further video codec of said further video system.

The invention yet further relates to a switch for use in a telecommunication system comprising at least two terminal systems coupled via at least said switch, with at least a first terminal system comprising a first display coupled to a first video codec for displaying video signals and comprising a first audio tranceiver for transceiving audio signals, and with said telecommunication system comprising a detector for a detection of an exchange of audio signals between said first terminal system and at least one second terminal system.

The switch according to the invention is characterised in that said first terminal system comprises a first receiver for a receival of an activation signal originating from a user, with said switch comprising a transmitter for, in response to said detection and said receival, transmitting said video signals displayed at said first display of said first terminal system to at least said second terminal system for being displayed at a second display of said second terminal system as well.

A first embodiment of the switch according to the invention is characterised in that said detector comprises a subdetector for a subdetection of said exchange being originated at said second terminal system.

A second embodiment of the switch according to the invention is characterised in that said switch comprises an adaptor for, in response to said receival, adapting said video signals in dependence of at least one of said first video codec of said first terminal system and a second video codec of said second video system.

The invention also relates to a method for use in a telecommunication system comprising at least two terminal systems coupled via at least one switch, with at least a first terminal system comprising a first display coupled to a first video codec for displaying video signals and comprising a first audio tranceiver for transceiving audio signals, and with said telecommunication system comprising a detector for a detection of an exchange of audio signals between said first terminal system and at least one second terminal system.

The method according to the invention is characterised in that said method comprises a first step of receiving an activation signal at said first terminal system from a user and comprises a second step of, in response to said detection and said receiving, transmitting said video signals displayed at said first display of said first terminal system to at least said second terminal system for being displayed at a second display of said second terminal system as well.

A first embodiment of the method according to the invention is characterised in that the method comprises the step of subdetecting said exchange being originated at said second terminal system.

A second embodiment of the method according the invention is characterised in that the method comprises the step of adapting said video signals in dependence of at least one of said first video codec of said first terminal system and a second video codec of said second video system.

The documents EP 99440040.6 and EP 99440039.8 and EP 99440038.0 and EP 99440037.2 all disclose several-part-terminal-systems, neither one of these documents discloses the telecommunication system according to the invention. All references including further references cited with respect to and/or inside said references are considered to be incorporated in this patent application.

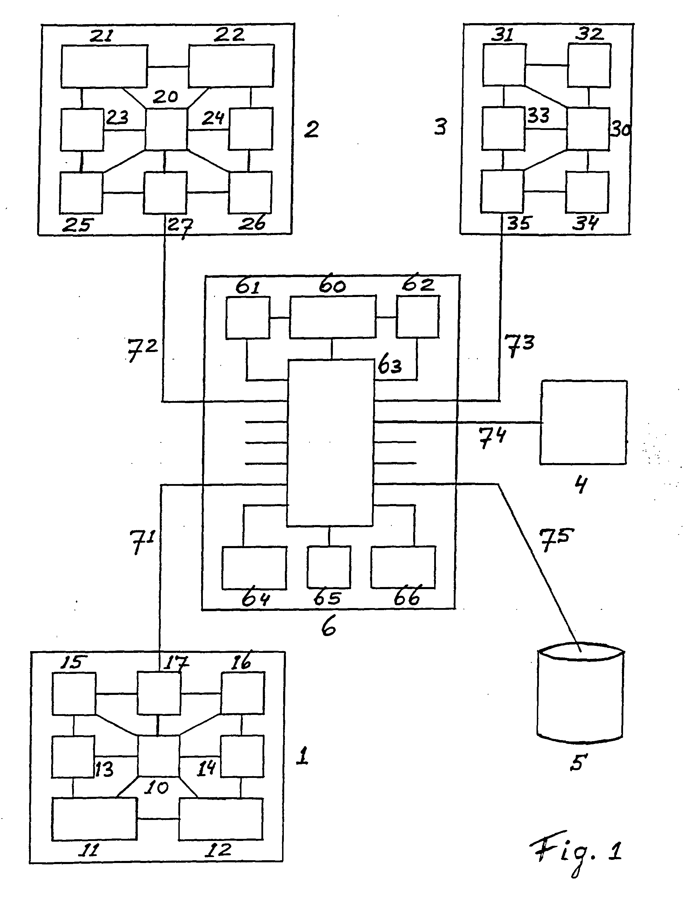

The invention will be further explained at the hand of embodiments described with respect to a drawing, whereby
figure 1 discloses a telecommunication system according to the invention comprising a first (one-part) terminal system according to the invention and a second (one-part) terminal system according to the invention and a third (two-part) terminal system according to the invention and a switch according to the invention.

Said first (one-part) terminal system 1 comprises a processor 10 coupled via control connections to a man-machine-interface 12 or mmi 12 (comprising a display - keyboard - loudspeaker - microphone etc.) and to a video codec 11 and to a detector 14 (possibly comprising an audio codec) and to an adaptor 13 and to an audio transceiver 16 and to a video transceiver 15 and to an audio/video splitter/combiner 17, which is coupled to switch 6 via a connection 71. Mmi 12 is coupled to video codec 11 via a video connection, which video codec 11 is coupled to adaptor 13 via a video connection, which adaptor 13 is coupled to video transceiver 15 via a video connection, which video transceiver 15 is coupled to audio/video splitter/combiner 17 via a video connection. Mmi 12 is further coupled to detector 14 via an audio connection, which detector 14 is coupled to audio transceiver 16 via an audio connection, which audio transceiver 16 is coupled to audio/video splitter/combiner 17 via an audio connection.

Said second (one-part) terminal system 2 comprises a processor 20 coupled via control connections to a man-machine-interface 22 or mmi 22 (comprising a display - keyboard - loudspeaker - microphone etc.) and to a video codec 21 and to a detector 24 (possibly comprising an audio codec) and to an adaptor 23 and to an audio transceiver 26 and to a video transceiver 25 and to an audio/video splitter/combiner 27, which is coupled to switch 6 via a connection 72. Mmi 22 is coupled to video codec 21 via a video connection, which video codec 21 is coupled to adaptor 23 via a video connection, which adaptor 23 is coupled to video transceiver 25 via a video connection, which video transceiver 25 is coupled to audio/video splitter/combiner 27 via a video connection. Mmi 22 is further coupled to detector 24 via an audio connection, which detector 24 is coupled to audio transceiver 26 via an audio connection, which audio transceiver 26 is coupled to audio/video splitter/combiner 27 via an audio connection.

Said third (two-part) terminal system 3,4 comprises a video terminal 3 (like for example a pc) and an audio terminal 4 (like for example a telephone). Video temrinal 3 comprises processor 30 coupled via control connections to a man-machine-interface 32 or mmi 32 (comprising a display - keyboard - loudspeaker etc.) and to a video codec 31 and to a detector 34 and to an adaptor 33 and to a video transceiver 35, which is coupled to switch 6 via a connection 73. Mmi 32 is coupled to video codec 31 via a video connection, which video codec 31 is coupled to adaptor 33 via a video connection, which adaptor 33 is coupled to video transceiver 35 via a video connection. Audio terminal 4 comprises for example a processor 40 (not shown) and a mmi 42 (not shown and for example comprising a keyboard - loudspeaker - microphone) and a detector 44 (not shown and for example comprising an audio codec) and an audio transceiver 46 (not shown) coupled to switch 6 via a connection 74.

Switch 6 comprises a processor 60 coupled to a coupler 63 and to a detector 61 and to a memory 62, which detector 61 and memory 62 are also coupled to coupler 63, and comprises a video tranceiver 64 and an adaptor 65 and an audio transceiver 66 all coupled to coupled 63, which is further coupled to connections 71, 72, 73, 74 and to a video source 5 via a connection 75.

The telecommunication system according to the invention comprising said terminal systems according to the invention and said switch according to the invention functions as follows.

According to a first embodiment, a first user of terminal system 1 is watching video on his mmi 12 in response to video signals arriving via video codec 11 at mmi 12. These video signals for example originate from a camera forming part of mmi 12 or for example originate from text processing software running in processor 10. Then, a second user of terminal system 2 decides to call said first user. Thereto, said second user dialls the number of said first user via his mmi 22, resulting in a signalling signal being sent from mmi 22 via processor 20 and/or via detector 24 and/or via audio transceiver 26 and via audio/video splitter/combiner 27 and via connection 72 to switch 6. Said signalling signal is sent to processor 60 via coupler 63, in response to which an audio-signal connection is set up between terminal system 2 and 1 via connections 72 and 71 and switch 6. As a result, said first user receives said call from said second user, and via an audio-signal path between mmi 22 and mmi 12 via detectors 24 and 14 and via audio transceivers 26 and 16 and via audio/video splitter/combiner 27 and 17 and connections 72 and 71 and coupler 63, both users can exchange audio signals and speak with each other. During the conversation, it is decided that said second user should also get to see said video signals. Thereto, said first user presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 controls video codec 11 and adapter 13 and video transceiver 15 (being also a transmitter, inter alia) and audio/video splitter/combiner 17 in such a way that said video signals together with said audio signals flow via connection 71 and coupler 63 and connection 72 to terminal system 2. There, via audio/video splitter/combiner 27, said audio signals for said conversation flow via audio transceiver 26 and detector 24 to mmi 22, and said video signals flow via video transceiver 25 and adapter 23 and video codec 21 to mmi 22. As a result, said second user can watch the same video signals on the display of mmi 22 as said first user is doing on the display of mmi 12.

According to a first alternative to said first embodiment, said first user is again watching said video on his mmi 12. Then, said first user of terminal system 1 decides to call a second user of terminal system 2. Thereto, said first user dialls the number of said second user via his mmi 12, resulting in a signalling signal being sent from mmi 12 via processor 10 and/or via detector 14 and/or via audio transceiver 16 and via audio/video splitter/combiner 17 and via connection 71 to switch 6. Said signalling signal is sent to processor 60 via coupler 63, in response to which an audio-signal connection is set up between terminal system 1 and 2 via connections 71 and 72 and switch 6. As a result, said second user receives said call from said first user, and via an audio-signal path between mmi 12 and mmi 22 via detectors 14 and 24 and via audio transceivers 16 and 26 and via audio/video splitter/combiner 17 and 27 and connections 71 and 72 and coupler 63, both users can exchange audio signals and speak with each other. During the conversation, it is decided that said second user should also get to see said video signals. Thereto, said first user again presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 controls video codec 11 and adapter 13 and video transceiver 15 (being also a transmitter, inter alia) and audio/video splitter/combiner 17 in such a way that said video signals together with said audio signals flow via connection 71 and coupler 63 and connection 72 to terminal system 2, etc. As a result, said second user can watch the same video signals on the display of mmi 22 as said first user is doing on the display of mmi 12.

According to a second alternative to said first embodiment, said detector 14 comprises a subdetector for detecting that said second user has initiated said call (or that said first user has not initiated the call). Then, in case of said second user having initiated said call, said subdetector informs processor 10, and said second user receives said video. But, in case of said first user having initiated said call, processor 10 is informed of this, and said video is not sent to said second user. Or, said detector 14 comprises a subdetector for detecting that said first user has initiated said call (or that said second user has not initiated the call). Then, in case of said first user having initiated said call, said subdetector informs processor 10, and said second user receives said video. But, in case of said second user having initiated said call, processor 10 is informed of this, and said video is not sent to said second user.

According to a third alternative to said first embodiment, video codecs 11 and 21 code/decode said video signals according to different standards. Then, either processor 10 or processor 60 or processor 20 will detect this, each one having the possibility of asking/ordering/activating either adapter 13 or adapter 65 (possibly in combination with video transceiver 64) or adapter 23 to convert said video signals into converted video signals. Said detection could be done by consulting an internal memory (comprising info about (other) terminal systems) or an external database, or could be done by sending a request signal and receiving a response signal comprising said info about (other) terminal systems. Or said video codecs 11 and 21 are able each to code/decode according to several standards, in which case they either detect this themselves resulting in an agreement with respect to the standard to be used, or either processor 10 or processor 60 or processor 20 will detect this, each one having the possibility of asking/ordering/activating said agreement with respect to the standard to be used.

According to a fourth alternative to said first embodiment, audio codecs in detectors 14 and 24 are used for coding/decoding said audio signals, which for example are able each to code/decode according to several standards, in which case they either detect this themselves resulting in an agreement with respect to the standard to be used, or either processor 10 or processor 60 or processor 20 will detect this, each one having the possibility of asking/ordering/activating said agreement with respect to the standard to be used. Again said detection could be done by consulting an internal memory (comprising info about (other) terminal systems) or an external database, or could be done by sending a request signal and receiving a response signal comprising said info about (other) terminal systems.

According to a second embodiment, a first user of terminal system 1 is watching video on his mmi 12 in response to video signals arriving from video source 5 via connection 75 and via coupler 63 and video transceiver 64 and via connection 71 and via audio/video splitter/combiner 17 and via video transceiver 15 and via adapter 13 and via video codec 11. These video signals for example originate from a camera coupled to video source 5 or for example originate from text processing software running in a processor in video source 5 and/or represent pay-tv signals etc.. Then, a second user of terminal system 2 decides to call said first user. Thereto, said second user dialls the number of said first user via his mmi 22, resulting in a signalling signal being sent from mmi 22 via processor 20 and/or via detector 24 and/or via audio transceiver 26 and via audio/video splitter/combiner 27 and via connection 72 to switch 6. Said signalling signal is sent to processor 60 via coupler 63, in response to which an audio-signal connection is set up between terminal system 2 and 1 via connections 72 and 71 and switch 6. As a result, said first user receives said call from said second user, and via an audio-signal path between mmi 22 and mmi 12 via detectors 24 and 14 and via audio transceivers 26 and 16 and via audio/video splitter/combiner 27 and 17 and connections 72 and 71 and coupler 63, both users can exchange audio signals and speak with each other. During the conversation, it is decided that said second user should also get to see said video signals. Thereto, said first user presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 then sends an instruction signal via audio/video splitter/combiner 17 and connection 71 and coupler 63 to processor 60. Either this instruction signal comprises information indicating that said terminal system 2 is also a destination for said video signals, or for example in memory 62 this information is stored and found in response to said instruction signal. As a result, processor 60 controls coupler 63 and video transceiver 64 in such a way that said video signals are also sent via connection 72 to terminal system 2. There, via audio/video splitter/combiner 27, said audio signals for said conversation flow via audio transceiver 26 and detector 24 to mmi 22, and said video signals originating from video source 5 flow via video transceiver 25 and adapter 23 and video codec 21 to mmi 22. As a result, said second user can watch the same video signals on the display of mmi 22 as said first user is doing on the display of mmi 12.

According to a first alternative to said second embodiment, said first user is again watching said video on his mmi 12. Then, said first user of terminal system 1 decides to call a second user of terminal system 2. Thereto, said first user dialls the number of said second user via his mmi 12, resulting in a signalling signal being sent from mmi 12 via processor 10 and/or via detector 14 and/or via audio transceiver 16 and via audio/video splitter/combiner 17 and via connection 71 to switch 6. Said signalling signal is sent to processor 60 via coupler 63, in response to which an audio-signal connection is set up between terminal system 1 and 2 via connections 71 and 72 and switch 6. As a result, said second user receives said call from said first user, and via an audio-signal path between mmi 12 and mmi 22 via detectors 14 and 24 and via audio transceivers 16 and 26 and via audio/video splitter/combiner 17 and 27 and connections 71 and 72 and coupler 63, both users can exchange audio signals and speak with each other. During the conversation, it is decided that said second user should also get to see said video signals. Thereto, said first user again presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 then sends said instruction signal via audio/video splitter/combiner 17 and connection 71 and coupler 63 to processor 60. As a result, processor 60 controls coupler 63 and video transceiver 64 in such a way that said video signals are also sent via connection 72 to terminal system 2, and said second user can watch the same video signals on the display of mmi 22 as said first user is doing on the display of mmi 12.

According to a second alternative to said second embodiment, said detector 14 comprises a subdetector for detecting that said second user has initiated said call (or that said first user has not initiated the call), or said detector 14 comprises a subdetector for detecting that said first user has initiated said call (or that said second user has not initiated the call), etc.

According to a third alternative to said second embodiment, video codecs 11 and 21 code/decode said video signals according to different standards, and/or video source 5 generates said video signals according to a certain standard. Then, either processor 10 or processor 60 or processor 20 will detect this, each one having the possibility of asking/ordering/activating either adapter 13 or adapter 65 (possibly in combination with video transceiver 64) or adapter 23 to convert said video signals into converted video signals. Said detection could be done by consulting an internal memory (comprising info about (other) terminal systems and/or video sources) or an external database, or could be done by sending a request signal and receiving a response signal comprising said info about (other) terminal systems and/or video sources. Or said video codecs 11 and 21 are able each to code/decode according to several standards, in which case they either detect this themselves resulting in an agreement with respect to the standard to be used (not in view of each other but in view of video source 5), or either processor 10 or processor 60 or processor 20 will detect this, each one having the possibility of asking/ordering/activating said agreement with respect to the standard to be used (not in view of each other but in view of video source 5).

According to a fourth alternative to said second embodiment, audio codecs in detectors 14 and 24 are used for coding/decoding said audio signals etc.

According to a third embodiment, a first user of terminal system 1 is watching video on his mmi 12 in response to video signals arriving via video codec 11 at mmi 12. These video signals for example originate from a camera forming part of mmi 12 or for example originate from text processing software running in processor 10. Then, a third user of terminal system 3,4 decides to call said first user. Thereto, said third user dialls the number of said first user via his audio terminal 4, resulting in a signalling signal being sent via connection 74 to switch 6. Said signalling signal is sent to processor 60 via coupler 63, in response to which an audio-signal connection is set up between audio terminal 4 and terminal system 1 via connections 74 and 71 and switch 6. As a result, said first user receives said call from said third user, and via an audio-signal path between audio terminal 4 and mmi 12 via detectors 14 and via audio transceivers 16 and via audio/video splitter/combiner 17 and connections 74 and 71 and coupler 63, both users can exchange audio signals and speak with each other. During the conversation, it is decided that said third user should also get to see said video signals. Thereto, said first user presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 controls video codec 11 and adapter 13 and video transceiver 15 (being also a transmitter, inter alia) and audio/video splitter/combiner 17 in such a way that said video signals together with said audio signals flow via connection 71 to coupler 63. Further, either processor 10 adds a code to said video signals indicating a video destination for said video signals being video terminal 3 (thereto processor 10 for example has consulted his memory or an external database or for example has received this video destination from switch 6 due to for example being stored in memory 62 in combination with an audio destination being audio terminal 4 or for example has received this video destination from audio terminal 4 as a part of said signalling signal and/or audio signals) in response to which processor 60 will detect this code and correspondingly control coupler 63, or processor 10 adds a code to said video signals indicating that a video destination is unknown (due to audio terminal 4 being uncapable of dealing with video) in response to which processor 60 will detect this code and search memory 62 for a video destination for said video signals (for example coupled to an audio destination for said audio signals) for controlling coupler 63, or in terminal system 1 no code is added, and in switch 6 in response to the receival of said video signals said memory 62 is consulted etc. In switch 6, said audio signals flow for example via audio transceiver 66 and coupler 63 and connection 74 to audio terminal 4, and said video signals flow for example via video transceiver 64 and coupler 63 and connection 73 to video terminal 3. There, said video signals flow via video transceiver 35 and adapter 33 and video codec 31 to mmi 32. As a result, said third user can watch the same video signals on the display of mmi 32 as said first user is doing on the display of mmi 12.

According to a first alternative to said third embodiment, said first user is again watching said video on his mmi 12. Then, said first user of terminal system 1 decides to call a third user of terminal system 3,4. Thereto, said first user dialls the number of said third user via his mmi 12, resulting in a signalling signal being sent from mmi 12 via processor 10 and/or via detector 14 and/or via audio transceiver 16 and via audio/video splitter/combiner 17 and via connection 71 to switch 6. Said signalling signal is sent to processor 60 via coupler 63, in response to which an audio-signal connection is set up between terminal system 1 and audio terminal 4 of terminal system 3,4 via connections 71 and 74 and switch 6. As a result, said third user receives said call from said first user, and via an audio-signal path between mmi 12 and audio terminal 4 via detectors 14 and via audio transceivers 16 and via audio/video splitter/combiner 17 and connections 71 and 74 and coupler 63, both users can exchange audio signals and speak with each other. During the conversation, it is decided that said second user should also get to see said video signals. Thereto, said first user again presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 controls video codec 11 and adapter 13 and video transceiver 15 (being also a transmitter, inter alia) and audio/video splitter/combiner 17 in such a way that said video signals together with said audio signals flow via connection 71 to coupler 63. Further, etc. As a result, said third user can watch the same video signals on the display of mmi 32 as said first user is doing on the display of mmi 12.

According to a second alternative to said third embodiment, said detector 14 comprises a subdetector for detecting that said third user has initiated said call (or that said first user has not initiated the call), or said detector 14 comprises a subdetector for detecting that said first user has initiated said call (or that said third user has not initiated the call), etc.

According to a third alternative to said third embodiment, video codecs 11 and 31 code/decode said video signals according to different standards. Then, either processor 10 or processor 60 or processor 30 will detect this, each one having the possibility of asking/ordering/activating either adapter 13 or adapter 65 (possibly in combination with video transceiver 64) or adapter 33 to convert said video signals into converted video signals. Said detection could be done by consulting an internal memory (comprising info about (other) terminal systems) or an external database, or could be done by sending a request signal and receiving a response signal comprising said info about (other) terminal systems. Or said video codecs 11 and 31 are able each to code/decode according to several standards, in which case they either detect this themselves resulting in an agreement with respect to the standard to be used, or either processor 10 or processor 60 or processor 30 will detect this, each one having the possibility of asking/ordering/activating said agreement with respect to the standard to be used.

According to a fourth alternative to said third embodiment, audio codecs in detectors 14 and in audio terminal 4 are used for coding/decoding said audio signals, which for example are able each to code/decode according to several standards, in which case they either detect this themselves resulting in an agreement with respect to the standard to be used, or either processor 10 or processor 60 or a processor in audio terminal 4 will detect this, each one having the possibility of asking/ordering/activating said agreement with respect to the standard to be used. Again said detection could be done by consulting an internal memory (comprising info about (other) terminal systems) or an external database, or could be done by sending a request signal and receiving a response signal comprising said info about (other) terminal systems.

According to a fourth embodiment, a first user of terminal system 1 is watching video on his mmi 12 in response to video signals arriving from video source 5 via connection 75 and via coupler 63 and video transceiver 64 and via connection 71 and via audio/video splitter/combiner 17 and via video transceiver 15 and via adapter 13 and via video codec 11. These video signals for example originate from a camera coupled to video source 5 or for example originate from text processing software running in a processor in video source 5 and/or represent pay-tv signals etc.. Then, a third user of terminal system 3,4 decides to call said first user. Thereto, said third user dialls the number of said first user via his audio terminal 4, resulting in a signalling signal being sent via connection 74 to switch 6. Said signalling signal is sent to processor 60 via coupler 63, in response to which an audio-signal connection is set up between audio terminal 4 and terminal system 1 via connections 74 and 71 and switch 6. As a result, said first user receives said call from said third user, and via an audio-signal path between audio terminal 4 and mmi 12 via detector 14 and via audio transceiver 16 and via audio/video splitter/combiner 17 and connections 74 and 71 and coupler 63, both users can exchange audio signals and speak with each other. During the conversation, it is decided that said third user should also get to see said video signals. Thereto, said first user presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 then sends for example an instruction signal via audio/video splitter/combiner 17 and connection 71 and coupler 63 to processor 60 (for example to indicate that an external video source is used). Either this instruction signal comprises information indicating that said video terminal 3 is also a destination for said video signals, or for example in memory 62 this information is stored and found in response to said instruction signal. Further, either processor 10 adds a code to said video signals indicating a video destination for said video signals being video terminal 3 (thereto processor 10 for example has consulted his memory or an external database or for example has received this video destination from switch 6 due to for example being stored in memory 62 in combination with an audio destination being audio terminal 4 or for example has received this video destination from audio terminal 4 as a part of said signalling signal and/or audio signals) in response to which processor 60 will detect this code and correspondingly control coupler 63, or processor 10 adds a code to said video signals indicating that a video destination is unknown (due to audio terminal 4 being uncapable of dealing with video) in response to which processor 60 will detect this code and search memory 62 for a video destination for said video signals (for example coupled to an audio destination for said audio signals) for controlling coupler 63, or in terminal system 1 no code is added, and in switch 6 in response to the receival of said video signals said memory 62 is consulted etc. In switch 6, said audio signals flow for example via audio transceiver 66 and coupler 63 and connection 74 to audio terminal 4, and said video signals flow for example via video transceiver 64 and coupler 63 and connection 73 to video terminal 3. There, said video signals flow via video transceiver 35 and adapter 33 and video codec 31 to mmi 32. As a result, said third user can watch the same video signals on the display of mmi 32 as said first user is doing on the display of mmi 12.

According to a first alternative to said fourth embodiment, said first user is again watching said video on his mmi 12. Then, said first user of terminal system 1 decides to call a third user of terminal system 3,4. Thereto, said first user dialls the number of said third user via his mmi 12, resulting in a signalling signal being sent from mmi 12 via processor 10 and/or via detector 14 and/or via audio transceiver 16 and via audio/video splitter/combiner 17 and via connection 71 to switch 6. Said signalling signal is sent to processor 60 via coupler 63, in response to which an audio-signal connection is set up between terminal system 1 and audio terminal 4 via connections 71 and 74 and switch 6. As a result, said third user receives said call from said first user, and via an audio-signal path between mmi 12 and audio terminal 4 via detector 14 and via audio transceiver 16 and via audio/video splitter/combiner 17 and connections 71 and 74 and coupler 63, both users can exchange audio signals and speak with each other. During the conversation, it is decided that said third user should also get to see said video signals. Thereto, said first user again presses for example one or more keys on the keyboard of mmi 12, resulting in an activation signal flowing from mmi 12 to processor 10. In response, processor 10 (being also a receiver, inter alia) receives this activation signal and consults said detector 14, which results in detector 14 informing processor 10 of said audio signals being exchanged (said conversation is going on). Processor 10 then sends for example said instruction signal via audio/video splitter/combiner 17 and connection 71 and coupler 63 to processor 60, etc. Further, etc. As a result, said third user can watch the same video signals on the display of mmi 32 as said first user is doing on the display of mmi 12.

According to a second alternative to said fourth embodiment, said detector 14 comprises a subdetector for detecting that said third user has initiated said call (or that said first user has not initiated the call), or said detector 14 comprises a subdetector for detecting that said first user has initiated said call (or that said third user has not initiated the call), etc.

According to a third alternative to said fourth embodiment, video codecs 11 and 31 code/decode said video signals according to different standards, and/or video source 5 generates said video signals according to a certain standard. Then, either processor 10 or processor 60 or processor 30 will detect this, each one having the possibility of asking/ordering/activating either adapter 13 or adapter 65 (possibly in combination with video transceiver 64) or adapter 33 to convert said video signals into converted video signals. Said detection could be done by consulting an internal memory (comprising info about (other) terminal systems and/or video sources) or an external database, or could be done by sending a request signal and receiving a response signal comprising said info about (other) terminal systems and/or video sources. Or said video codecs 11 and 31 are able each to code/decode according to several standards, in which case they either detect this themselves resulting in an agreement with respect to the standard to be used (not in view of each other but in view of video source 5), or either processor 10 or processor 60 or processor 30 will detect this, each one having the possibility of asking/ordering/activating said agreement with respect to the standard to be used (not in view of each other but in view of video source 5).

According to a fourth alternative to said fourth embodiment, audio codecs in detector 14 and audio terminal 4 are used for coding/decoding said audio signals etc.

According to a fifth embodiment, a third user of terminal system 3,4 is watching video on his mmi 32 in response to video signals arriving via video codec 31 at mmi 32. These video signals for example originate from a camera forming part of mmi 32 or for example originate from text processing software running in processor 30. Or said third user of terminal system 3,4 is watching video on his mmi 32 in response to video signals arriving from video source 5 via connection 75 and via coupler 63 and video transceiver 64 and via connection 73 and via video transceiver 35 and via adapter 33 and via video codec 31. These video signals for example originate from a camera coupled to video source 5 or for example originate from text processing software running in a processor in video source 5 and/or represent pay-tv signals etc.. Then, for example a first user of terminal system 1 or a second user of terminal system 2 decides to call said third user etc. Or said third user of terminal system 3,4 decides to call said first or said second user etc.

According to a sixth embodiment, detector 61 gets at least a part of the functions of detectors 14, 24 and 34, etc., which generally will require some extra communication between at least one of said temrinal systems 1 and 2 and 3,4 at one side and switch 6 at the other side.

All embodiments are just embodiments and do not exclude other embodiments not shown and/or described. All alternatives are just alternatives and do not exclude other alternatives not shown and/or described. Any part of (any alternative to) any embodiment can be combined with any other part of (any alternative to) any embodiment, without departing from the scope of this invention.

Said conversation on the one hand and said exchange of video signals on the other hand could be made mutually dependent or mutually independent or a mix of both, in other words an ending of said conversation could imply an ending of said exchange of video signals or no ending or a conditional ending.

Each one of said connections 71-75 is at least a single or double analog connection (possibly with xDSL etc.) or is at least a digital connection comprising at least one or two channels (like for example ISDN with 2 B + D channels etc.) and is at least either a wired connection or a cordless connection (like for example DECT etc.) or a mobile connection (like GSM or GPRS or UMTS or CTS etc.). In addition, each one of said terminal systems 1 and 2 and 3,4 will need adaptations and/or an interface all known from prior art to be able to communicate via said connections. These connections may form part of an INTRANET and/or INTERNET, and may comprise an always-on connection as described in EP 99440311.1. Each one of said connections will comprise at least one channel, but will preferably comprise two or more channels (for example at least partly analog and multiplexed in time and/or frequency and/or at least partly digital and/or comprising one or more data channels and/or one or more signalling channels etc.), whereby for example said audio signals and video signals will be exchanged via one or more data channels and whereby for example said signalling signal and/or said instruction signal and/or said asking/ordering/activating and/or said request and response signal and/or said code are exchanged via either one or more signalling channels or one or more data channels or a combination of both kinds of channels.

Of course, said telecommunication system is not restricted to an interaction between two users, interactions among three or more users are also possible, whereby either a first user is watching video and a second user and a third user call said first user separately, or together, etc. or a first user and a second user are calling with the first user watching video, whereby a third user calls the first user or the second user, and at least said second user or said third user also gets said video, or a first user and a second user are calling with the first user as well as the second user watching video, whereby a third user calls the first user or the second user, and then said third user also gets said video, etc.

## Claims

1. Telecommunication system comprising at least two terminal systems coupled via at least one switch, with at least a first terminal system comprising a first display coupled to a first video codec for displaying video signals and comprising a first audio tranceiver for transceiving audio signals, and with said telecommunication system comprising a detector for a detection of an exchange of audio signals between said first terminal system and at least one second terminal system, **characterised in that** said first terminal system comprises a first receiver for a receival of an activation signal originating from a user, with said telecommunication system comprising a transmitter for, in response to said detection and said receival, transmitting said video signals displayed at said first display of said first terminal system to at least said second terminal system for being displayed at a second display of said second terminal system as well.

2. Telecommunication system according to claim 1, **characterised in that** said detector comprises a subdetector for a subdetection of said exchange being originated at said second terminal system.

3. Telecommunication system according to claim 1 or 2, **characterised in that** said telecommunication system comprises an adaptor for, in response to said receival, adapting said video signals in dependence of at least one of said first video codec of said first terminal system and a second video codec of said second video system.

4. Terminal system for use in a telecommunication system comprising at least two terminal systems coupled via at least one switch, with said terminal system comprising a display coupled to a video codec for displaying video signals and comprising an audio tranceiver for transceiving audio signals, and with said telecommunication system comprising a detector for a detection of an exchange of audio signals between said terminal system and at least one further terminal system, **characterised in that** said terminal system comprises a receiver for a receival of an activation signal originating from a user, with said telecommunication system comprising a transmitter for, in response to said detection and said receival, transmitting said video signals displayed at said display of said terminal system to at least said further terminal system for being displayed at a further display of said further terminal system as well.

5. Terminal system according to claim 4, **characterised in that** said detector comprises a subdetector for a subdetection of said exchange being originated at said further terminal system.

6. Terminal system according to claim 4 or 5, **characterised in that** said terminal system comprises an adaptor for, in response to said receival, adapting said video signals in dependence of at least one of said video codec of said terminal system and a further video codec of said further video system.

7. Switch for use in a telecommunication system comprising at least two terminal systems coupled via at least said switch, with at least a first terminal system comprising a first display coupled to a first video codec for displaying video signals and comprising a first audio tranceiver for transceiving audio signals, and with said telecommunication system comprising a detector for a detection of an exchange of audio signals between said first terminal system and at least one second terminal system, **characterised in that** said first terminal system comprises a first receiver for a receival of an activation signal originating from a user, with said switch comprising a transmitter for, in response to said detection and said receival, transmitting said video signals displayed at said first display of said first terminal system to at least said second terminal system for being displayed at a second display of said second terminal system as well.

8. Switch according to claim 7, **characterised in that** said detector comprises a subdetector for a subdetection of said exchange being originated at said second terminal system.

9. Switch according to claim 7 or 8, **characterised in that** said switch comprises an adaptor for, in response to said receival, adapting said video signals in dependence of at least one of said first video codec of said first terminal system and a second video codec of said second video system.

10. Method for use in a telecommunication system comprising at least two terminal systems coupled via at least one switch, with at least a first terminal system comprising a first display coupled to a first video codec for displaying video signals and comprising a first audio tranceiver for transceiving audio signals, and with said telecommunication system comprising a first detector for a detection of an exchange of audio signals between said first terminal system and at least one second terminal system, **characterised in that** said method comprises a first step of receiving an activation signal at said first terminal system from a user and comprises a second step of, in response to said detection and said receiving, transmitting said video signals displayed at said first display of said first terminal system to at least said second terminal system for being displayed at a second display of said second terminal system as well.
